# EUROPÄISCHE PATENTSCHRIFT

(11) **EP 1 632 550 B1**
(45) Veröffentlichungstag und Bekanntmachung des Hinweises auf die Patenterteilung: **02.01.2013**
(21) Anmeldenummer: 05015491.3
(22) Anmeldetag: 16.07.2005
(51) Int. Cl.: C10J 3/00, C10J 3/78

(54) **Verfahren zur Umsetzung von Biomasse in gasförmige Produkte**
Process for converting biomass into gaseous products
Procédé de conversion de biomasse en produit gazeux

(30) Priorität: 07.08.2004 DE 102004038491
(43) Veröffentlichungstag der Anmeldung: 08.03.2006
(73) Patentinhaber: Karlsruher Institut für Technologie, 76131 Karlsruhe (DE)
(72) Erfinder: Dinjus, Eckhard, Prof. Dr., 76774 Leimersheim (DE); Kruse, Andrea, Dr., 76646 Bruchsal (DE); Sinag, Ali, 06540 A. Ayrancy-Ankara (TK); Pfeiffer, Johannes, 77974 Meissenheim (DE)

(56) Entgegenhaltungen:
- EP-A- 1 371 714
- WO-A-2005/047435
- DE-A1- 2 530 600
- DE-A1- 10 030 778
- US-A- 6 120 567

## Beschreibung

Die Erfindung betrifft ein Verfahren zur Umsetzung von Biomasse, insbesondere zur Erzeugung von Wasserstoff.

Dokument DE2530600 offenbart ein Verfahren zur Umsetzung von fossilen Brennstoffen in gasförmige Produkte mit der Zugabe eines Mittels, das, während und nach dem Aufheizen der fossilen Brennstoffe, aktiven Wasserstoff bereitstellt.

Dokument EP1371714 offenbart ein Verfahren zur Umsetzung von Biomasse in Anwesenheit von einem Katalysator in gasförmige Produkte. Dokument EP1371714 offenbart nicht die Umsetzung von Furfuralen durch einen katalytischen Effekt.

Furfurale und Phenole, die als typische Zwischenprodukte der Biomasse-Verflüssigung, die in einem Temperaturbereich von ca. 300-350 °C durchgeführt wird, vorkommen, treten bei der Biomasse-Vergasung in überkritischem Wasser, d.h. in der Praxis oberhalb von ca. 500°C, als unerwünschte, jedoch stabile Zwischenprodukte auf. Sie führen zu einer Verlängerung der Reaktionszeit und häufig zu einer unvollständigen Vergasung, da sie bzw. ihre Polymerisationsprodukte relativ langsam bis gar nicht vergast werden, was zur Teer- und Koksbildung führt.

Wie M. Kaltschmitt und H. Hartmann (Hrsg.), Energie aus Biomasse, Grundlagen, Techniken und Verfahren, Springer-Verlag, Seite 487-489, 2001, entnommen werden kann, sind aus der Verflüssigung von Biomasse Verfahren bekannt, bei denen Kohlenmonoxid und ein Alkalisalz bzw. Wasserstoff und Hydrierungskatalysatoren zugesetzt werden.

Bei dem so genannten PERC-Verfahren wird Holzmehl mit rezykliertem Pyrolyseöl vermischt und durch einen Röhrenreaktor gepumpt. Dieses Gemisch verweilt rund 10-30 min bei Temperaturen von 300-340°C und einem Druck von etwa 20 MPa. Die Ölausbeuten liegen je nach den gewählten Reaktionsbedingungen zwischen 40-55 Gew.%, bezogen auf die eingesetzte Trockenmasse organischen Materials. Der feste Rückstand beträgt nur etwa 1 Gew.%. Bis zu 10 Gew.% der organischen Verbindungen sind wasserlöslich, der Rest des Holzes wird zu CO₂ und Wasser umgesetzt.

Im so genannten LBL-Verfahren wird die Biomasse zunächst durch Zusatz von Schwefelsäure vorhydrolysiert, um die Umsetzbarkeit zu erhöhen. Mit Natriumcarbonat wird dann wieder neutralisiert und die Mischung in einem Refiner homogenisiert. Der wässrige Brei mit einem Feststoffanteil von 16-20 Gew.% wird nun durch einen Reaktor gefördert und bei 17-24 MPa und 330-360°C verflüssigt. Hier findet in Gegenwart von Wasser und CO unter hohem Druck die Wassergasreaktion statt, die durch Zugabe von Alkali- oder Erdalkalicarbonaten unterstützt wird. Der erzeugte aktive Wasserstoff dient zur Sättigung freier Radikale.

Im so genannten Bergius-Pier Verfahren wird Holz einer Korngröße von 1-2 mm zusammen mit einem Katalysator und Holzteer angemaischt. Die Masse wird in einen Autoklaven gegeben, etwa 10 MPa Wasserstoff aufgedrückt und langsam auf die gewünschte Reaktionstemperatur, z.B. 380°C, aufgeheizt. Nach etwa 30-60 min erfolgt die Abscheidung im Heißabscheider; danach folgen weitere Abscheider. Mit Palladium als Katalysator lassen sich aus 100 kg Holz rund 36 kg Produktöl gewinnen; der Rest dient zur Herstellung der pumpfähigen Öl/Holz-Mischung. Aufgrund des geringen Wassergehaltes des Holzes bilden sich bei diesem Verfahren keine überkritischen Bedingungen aus.

Aus A. Sinag, A. Kruse und J. Rathert, Influence of the Heating Rate and the Type of Catalyst on the Formation of Key Intermediates and on the Generation of Gases During Hydropyrolysis of Glucsoe in Supercritical Water in a Batch Reactor, Ind. Eng. Chem. Res., Band 43, Seite 502-508, 2004, ist bekannt, dass die Katalysatoren Nickel oder Kaliumcarbonat die thermische Zersetzung von Furfuralen, die bei einer Umwandlung von Glucose bei 500 °C entstehen, begünstigen.

Aus A. Kruse, D. Meier, P. Rimbrecht und M. Schacht, Gasification of Pyrocatechol in Supercritical Water in the Presence of Potassium Hydroxide, Ind. Eng. Chem. Res., Band 39, Seite 4842-4848, 2000, ist bekannt, dass sich Phenole im Gegensatz zu Polymerisaten vollständig umsetzen.

Ausgehend hiervon ist es die Aufgabe der vorliegenden Erfindung, ein Verfahren vorzuschlagen, das die genannten Nachteile und Einschränkungen nicht aufweist. Insbesondere besteht die Aufgabe darin, ein Verfahren zur Umsetzung von Biomasse in gasförmige Produkte so auszugestalten, dass die Bildung unerwünschter Polymerisationsprodukte, vor allem aus Furfuralen und anderen polymerisationfähigen Zwischenprodukten, unterdrückt und eine hohe Ausbeute an Wasserstoff erzielt wird.

Diese Aufgabe wird durch die Verfahrensschritte des Anspruchs 1 gelöst. Die Unteransprüche beschreiben vorteilhafte Ausgestaltungen der Erfindung.

Für das erfindungsgemäße Verfahren zur Umsetzung von Biomasse in gasförmige Produkte wird gemäß Verfahrenschritt a) zunächst nasse Biomasse, d.h. Biomasse mit einem Wassergehalt oberhalb von 50 Gew.%, insbesondere oberhalb von 70 Gew.%, bevorzugt oberhalb von 80 Gew.%, besonders bevorzugt oberhalb von 90 Gew.%, in einem Reaktionsgefäß bereitgestellt. Das erfindungsgemäße Verfahren kann kontinuierlich oder diskontinuierlich (Batch-Betrieb) ablaufen.

Die Biomasse wird anschließend nach Verfahrensschritt b) in überkritischem Wasser, d.h. oberhalb einer Temperatur von 374°C, bevorzugt zwischen 500°C und 700 °C, und einem Druck oberhalb von 22,1 MPa, aber nicht höher als 30 MPa umgesetzt.

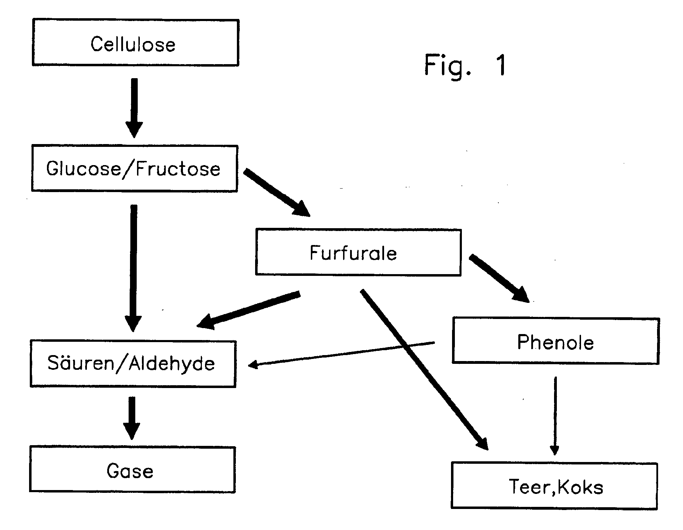

Als Produktstrom werden zum einen gasförmige Produkte gebildet, die im Wesentlichen die Gase Wasserstoff, Kohlenmonoxid, Kohlendioxid und Methan umfassen. Darüber hinaus werden hierbei, wie aus der Fig. 1 entnommen werden kann, die schematisch das vereinfachte Reaktionsschema der Biomasse-Vergasung am Beispiel von Glucose in überkritischem Wasser aufzeigt, flüssige Produkte, insbesondere Furfurale und Phenole, die zur Teer- und Koksbildung führen können, erzeugt.

Bei der Umsetzung von Biomasse wird eine möglichst schnelle Aufspaltung der Reaktionsprodukte in kleine Bruchstücke, insbesondere Säuren und Aldehyde, angestrebt, die dann weiter zu den gewünschten gasförmigen Produkten, vorzugsweise Wasserstoff führen. Neben dieser erwünschten Spaltung treten jedoch Parallelreaktionen, die die Ausbeute an Gasen vermindern.

Eine dieser Parallelreaktionen ist die Bildung von Furfuralen. Furfurale sind sehr reaktiv und können leicht polymerisieren. Diese Polymerisate vermindern zudem nicht nur die Gasausbeute, sondern können auch zu Verstopfungen, Fouling von Wärmetauschern und anderen unerwünschten Erscheinungen führen.

Eine weitere Parallelreaktion ist die Bildung von Phenolen. Auch diese vermindern die Gasausbeute, besitzen jedoch eine geringere Neigung zur Polymerisation. Ihr großer Nachteil besteht darin, dass diese eine geringe Reaktionsneigung aufweisen und eine vollständige Vergasung von Phenolen erheblich längere Reaktionszeiten erfordert als die der Biomasse.

Wesentlich an der vorliegenden Erfindung ist die gemäß Verfahrensschritt erfolgende c) Zugabe eines Mittels, das aktiven (aktivierten) Wasserstoff bereitstellt, wodurch sich bereits während des Aufheizens der Biomasse, aber auch bei den angestrebten Temperaturen von 500-700 °C die gebildeten Furfurale zersetzen.

Unter aktivem Wasserstoff (aktiviertem Wasserstoff) wird Wasserstoff mit einer im Vergleich zu molekularem Wasserstoff H₂ höheren Reaktivität verstanden, der
- als atomarer Wasserstoff, d.h. als Wasserstoff *in statu nascendi,*
- in Form von auf einer Oberfläche wie beispielsweise einem Hydrierungskatalysator adsorbiertem Wasserstoff oder
- als Wasserstoff, der insbesondere von einem organischen Molekül wie z. B. einem Formiat leicht abtrennbar ist,
vorliegt.

In einer bevorzugten Ausgestaltung wird hierzu Wasserstoff, vorzugsweise in Form von H₂ mit einem Partialdruck zwischen 0,01 und 10 MPa, zusammen mit einem Hydrierungskatalysator, der vorzugsweise ein Element (Metall) der sechsten oder achten Nebengruppe des chemischen Periodensystems, besonders bevorzugt Nickel (z. B. als Raney-Nickel), Palladium, Platin oder einer Legierung, in der die genannten Metalle als Bestandteil auftreten, eingesetzt. Eisen und Kobalt liefern im Allgemeinen keine ausreichenden Ergebnisse.

In einer besonders bevorzugten Ausgestaltung wird hierzu der Wasserstoff mit dem genannten Partialdruck dem Produktstrom entnommen, und der Reaktor (Reaktionsgefäß) oder dessen Oberfläche bestehen zumindest teilweise aus einem Hydrierungskatalysator wie z. B. Inconel 625 (Werkstoff-Nr: 2.4856) oder einer anderen Nickelbasislegierung.

Im System aus Wasserstoff und Hydrierungskatalysator wird gemäß üblicher Vorstellung der Wasserstoff an der Oberfläche des Katalysators adsorbiert. Hierdurch wird die energetisch sehr günstige Wasserstoff-Wasserstoff-Bindung geschwächt bzw. gelöst, wodurch sich die Reaktivität des Wasserstoffs erhöht.

In einer alternativen Ausgestaltung werden Kohlenmonoxid (CO), vorzugsweise mit einem Partialdruck zwischen 0,01 MPa und 10 MPa, und ein Alkalisalz, insbesondere ein Natrium- oder Kaliumsalz, eines Carbonats, Hydrogencarbonats, Hydroxids oder einer organischen Säure eingesetzt.

In einer besonders bevorzugten Ausgestaltung wird hierzu Kohlenmonoxid mit dem genannten Partialdruck dem Produktstrom entnommen, und ein Alkalisalz ist bereits in der Biomasse vorhanden oder wurde vor oder während Verfahrensschritt a) oder b) der Biomasse zugegeben.

Das Kohlenmonoxid reagiert mit dem in der nassen Biomasse vorhandenen Wasser entsprechend der der so genannten *Wassergas-Shift-Reaktion* zu Kohlenmonoxid und Wasser:

CO + H₂O → CO₂ + H₂

Der genaue Reaktionsmechanismus ist unbekannt; es wird jedoch allgemein angenommen, dass Ameisensäure bzw. ihre Salze, d. h. Formiate, als Zwischenprodukte auftreten.

Die Wassergas-Shift-Reaktion wird durch Alkalisalze, insbesondere Natrium- oder Kaliumsalze, von Carbonaten, Hydrogencarbonaten, Hydroxiden oder organischen Säuren katalysiert, wobei der hierbei auftretende Mechanismus ebenfalls unbekannt ist.
In der Regel wird aber auch hier die Bildung eines Formiats als Zwischenprodukt angenommen.

Der Grund für die hydrierende bzw. reduzierende Wirkung des Systems aus Kohlenmonoxid und Alkalisalz ist nicht bekannt. Wahrscheinlich handelt es sich aber
- entweder um Wasserstoff *in statu nascendi,* d.h. um atomaren Wasserstoff, der primär aus einem Formiat oder einem anderen wasserstoffhaltigen Zwischenprodukt der Katalyse entsteht,
- oder um Ameisensäure, eines ihrer Salze (Formiate), Formaldehyd oder einem anderen Zwischenprodukt der Wassergas-Shift-Reaktion, das wesentlich reaktiver ist als H₂.

Schließlich werden gemäß Verfahrensschritt d) die gasförmigen Produkte dem Produktstrom entnommen und in einer besonders bevorzugten Ausgestaltung der Reaktion teilweise, d.h. insbesondere mit dem genannten Partialdruck, wieder zugeführt.

Die vorliegende Erfindung basiert auf der Beobachtung, dass sich mit Hilfe des Zusatzes von Wasserstoff und Nickel einerseits und von Kohlenmonoxid und Alkalisalzen andererseits die chemischen Abläufe der Biomasseumsetzung in überkritischem Wasser, d.h. oberhalb einer Temperatur von 374°C, bevorzugt oberhalb von 500°C und einem Druck von 22,1 MPa, vorzugsweise unterhalb von 30 MPa steuern lassen.

Die Zugabe von Wasserstoff und Nickel vermindert die in **Fig. 1** aufgezeigten beiden Parallelreaktionen (Bildung von Furfuralen, Bildung von Phenolen) bei der Biomassespaltung von Gasen. Die Zugabe von Kohlenmonoxid und Alkalisalzen vermindert zwar ebenfalls die Bildung von Furfuralen, allerdings erhöht deren Zugabe die Bildung von Phenolen. Es ist jedoch möglich, dieser Phenolbildung durch aus der DE 102 59 928 A1 bekannte Reaktorkonzepte entgegen zu wirken oder die Phenole einer stofflichen Nutzung, z. B. als Ausgangsstoff für Phenol-Formaldehyd-Harze, zuzuführen.

Mit der vorliegenden Erfindung wird die Unterdrückung der Bildung unerwünschter Polymerisationsprodukte, vor allem aus Furfuralen und anderen polymerisationfähigen Zwischenprodukten erzielt. Eine Verminderung der Polymerisationsprodukte führt, da Spaltreaktionen gefördert werden, notwendigerweise zu einer Erhöhung niedermolekularer Zwischenprodukte wie Ameisensäure, Essigsäure usw., die sich jedoch gemäß **Fig. 1** zu den gewünschten Gasen umsetzen. Im Unterschied zur Verflüssigung von Biomasse, bei der Kohlenmonoxid (CO) und Alkalisalze bzw. Wasserstoff und Hydrierungskatalysatoren zur Absättigung von während der Reaktion gebildeten Radikalen und damit zur Verhinderung von Polymerisation dienen, bewirken diese Zusätze bei der erfindungsgemäßen Umsetzung der Biomasse zu gasförmigen Produkten einen Abbau unerwünschter Zwischenprodukte.

Die Erfindung weist folgende wesentliche Vorteile auf:
- Höhere Ausbeute am gewünschten Produkt Wasserstoff;
- Kontinuierliche Fahrweise des Prozesses aufgrund der Verminderung von Verstopfungen;
- Vollständigere Umsetzung bzw. kürzere Reaktionszeiten;
- Vermeidung von Polymerisationsprodukten, insbesondere von Koks und Teer;
- Stoffliche Nutzung von Zwischenprodukten (Phenolen).

Die Erfindung wird im Folgenden anhand von Ausführungsbeispielen und der Figuren näher erläutert. Es zeigen:
- **Fig. 1**: Vereinfachtes Reaktionsschema der Biomasse-Vergasung am Beispiel von Glucose in überkritischem Wasser.
- **Fig. 2**: Konzentration an 5-Hydroxymethylfurfural bei der Umsetzung von Glucose mit verschiedenen Zusätzen.
- **Fig. 3**: Konzentration an Phenol bei der Umsetzung von Glucose mit verschiedenen Zusätzen.

Bisher durchgeführte Untersuchungen zur Gaserzeugung zeigen, dass sich Glucose insbesondere in Anwesenheit von Alkalisalzen ähnlich wie Biomasse verhält. Die folgenden Experimente wurden daher mit Glucose als Modellsubstanz durchgeführt. Hierbei ist jedoch zu beachten, dass das Produktspektrum in Falle von Biomasse sehr viel größer ist, da diese eine Vielzahl verschiedener Substanzen umfasst.

Für diese Untersuchungen wird ein Taumelautoklav mit einem Innenvolumen von 1000 ml eingesetzt, der für eine Temperatur von 500 °C und einen Druck von 50 MPa ausgelegt ist. Der Autoklav ist aus säurebeständigem, austenitischem CrNiMo-Stahl (Werkstoff-Nr:1.4571 bzw. 1.4980) gefertigt. Das Reaktionsgefäß ist geschmiedet und an der Innenseite wegen hohen Anforderungen an Temperatur- und Korrosionsbeständigkeit mit Inconel 625 (Werk-st.-Nr: 2.4856) ausgekleidet. Auf das Gefäß ist mittels acht Dehnschrauben (SW36) der Deckel aufgesetzt. Der Deckel ist ebenfalls aus Inconel 625 gearbeitet und wird mit einer Konusdichtung (Metall/Metall) gedichtet. Weiterhin sind im Deckel zwei Abdrückschrauben, ein Rohr (DN4) zur Aufnahme von zwei Thermoelementen, je ein Gasein- und -auslassventil (DN3), ein Manometeranschluss, eine Berstscheibe und ein Blindstopfen angeordnet. Um das Reaktionsgefäß ist eine 200 mm starke Isolierung angebracht. In der Isolierung des Gefäßes sind die Widerstandsheizstäbe mit einer Leistung von zusammen 4 kW fest installiert. Der eigentliche Autoklav wird locker in den Heiz- und Isoliermantel eingesetzt, der horizontal pendelnd in eine Gabel eingehängt ist, die vertikal in ein Axiallager eingesteckt ist. Am hinteren Ende des Heizmantels ist ein Kugelgelenk angebracht, das über einen Exzenter mit der Antriebswelle des Getriebemotors (0,18 kW, 45 U/min) verbunden ist, wodurch es zu einer zweiaxialen Taumelbewegung kommt, die eine gute Durchmischung des Autoklaveninhalts gewährleistet.

Bei den hier beschriebenen Experimenten wurden
- eine Glucoselösung,
- eine Lösung mit Glucose und K₂CO₃ oder
- eine Glucoselösung mit suspendiertem Raney-Nickel in den Autoklaven eingeführt, und der verbleibende Gasraum im Autoklaven mit Stickstoff gespült. Der Anteil der Glucose betrug 5 bzw. 7,5 Gew.%, der Anteil an K₂CO₃ bzw. Raney-Nickel 0,5 Gew.%. Bei Zusatz von Nickel wurden optional 2,7 MPa H₂ und bei Zusatz von K₂CO₃ optional 2,7 MPa CO aufgedrückt. Dann wurde mit einer Heizrate von 1 K/min. bzw. 3 K/min. auf 500°C aufgeheizt. Die Reaktionsmischung verblieb 1 Stunde bei 500°C.

Im Folgenden werden jeweils die gefundenen Mengen an Zwischenprodukten bei den o. g. Experimenten mit der Modellsubstanz Glucose miteinander verglichen. Der Einfluss dieser Zusätze auf das chemische Geschehen wird anhand der Zwischenprodukte 5-Hydroxymethylfurfural und Phenole dargestellt.

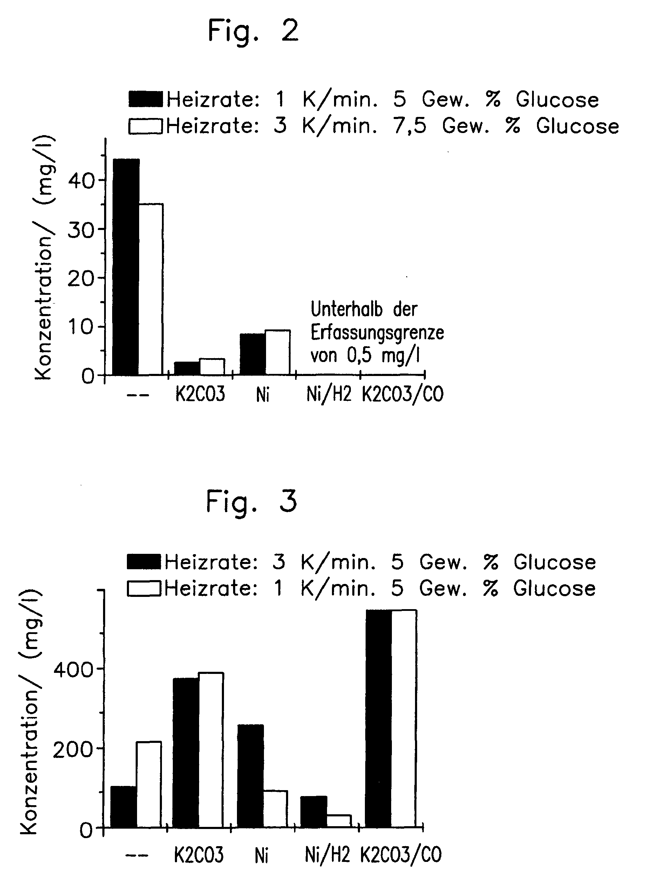

Aus **Fig. 2** ist ersichtlich, dass der Zusatz von K₂CO₃ oder Nickel die Bildung von Furfuralen, hier in Form von 5-Hydroxymethylfufural, vermindert. Dieser Effekt wird durch Zusatz von CO zu K₂CO₃ bzw. H₂ zu Nickel wesentlich verstärkt, so dass der Gehalt an 5-Hydroxymethylfurfural unter die Erfassungsgrenze sank.

Nach **Fig. 3** ergibt sich bei den Phenolen ein anderes Bild: Die Zugabe von Nickel **und** H₂ führt zur geringsten beobachteten Konzentration an Phenolen, während die Zugabe von K₂CO₃ **und** CO die höchsten beobachteten Konzentration bewirkt.

## Patentansprüche

1. Verfahren zur Umsetzung von Biomasse in gasförmige Produkte mit den Verfahrensschritten
a) Bereitstellen von Biomasse, die einen Wassergehalt von mindestens 50 % aufweist, in einem Reaktionsgefäß,
b) Aufheizen der Biomasse auf eine Temperatur zwischen 500°C und 700 °C bei einem Druck zwischen 22,1 MPa und 30 MPa, wobei sich im Produktstrom neben den gasförmigen Produkten Wasserstoff, Kohlenmonoxid, Kohlendioxid und Methan auch Furfurale und Phenole bilden,
c) Zugabe eines Mittels, das aktiven Wasserstoff befreitstellt, während und nach dem Aufheizen der Biomasse, wodurch sich die Furfurale zersetzen,
d) Entnehmen der gasförmigen Produkte aus dem Produktstrom.

2. Verfahren nach Anspruch 1, bei dem das Mittel, das aktiven Wasserstoff bereitstellt, Wasserstoff und einen Hydrierungskatalysator umfasst.

3. Verfahren nach Anspruch 2, bei dem das Reaktionsgefäß oder dessen Oberfläche ganz oder teilweise aus dem Hydrierungskatalysator besteht.

4. Verfahren nach Anspruch 2 oder 3 mit einem Element der sechsten oder achten Nebengruppe des Periodensystems oder einer Legierung, die mindestens ein derartiges Element umfasst, als Hydrierungskatalysator.

5. Verfahren nach Anspruch 4 mit Nickel, Palladium, Platin oder einer Legierung, die mindestens ein derartiges Element umfasst, als Hydrierungskatalysator.

6. Verfahren nach Anspruch 1, bei dem das Mittel, das aktiven Wasserstoff bereitstellt, Kohlenmonoxid und ein Alkalisalz umfasst.

7. Verfahren nach Anspruch 6, bei dem das Alkalisalz in der Biomasse vorhanden ist.

8. Verfahren nach einem der Ansprüche 2 bis 7, wobei Wasserstoff oder Kohlenmonoxid dem Produktstrom entnommen werden.

9. Verfahren nach einem der Ansprüche 2 bis 8 mit einem Partialdruck für Wasserstoff oder Kohlenmonoxid zwischen 0,01 MPa und 10 MPa.

## Claims

1. Process for converting biomass into gaseous products with the following process steps
a) providing biomass, which exhibits a water content of at least 50%, in a reaction container,
b) heating the biomass to a temperature between 500°C and 700°C at a pressure between 22.1 MPa and 30 MPa, wherein, in addition to the gaseous products hydrogen, carbon monoxide, carbon dioxide and methane, furfurals and phenols are also formed in the product stream,
c) adding an agent which provides active hydrogen, during and after heating of the biomass, whereby the furfurals decompose,
d) removing the gaseous products from the product stream.

2. Method according to claim 1, in which the agent that provides active hydrogen comprises hydrogen and a hydration catalyst.

3. Method according to claim 2, in which the reaction container or its surface wholly or partly consists of the hydration catalyst.

4. Method according to claim 2 or 3 with an element of the sixth or eighth group of the periodic system or an alloy, which comprises at least one such element, as the hydration catalyst.

5. Method according to claim 4 with nickel, palladium, platinum or an alloy, which comprises at least one such element, as the hydration catalyst.

6. Method according to claim 1, in which the agent that provides active hydrogen comprises carbon monoxide and an alkaline salt.

7. Method according to claim 6, in which the alkaline salt is present in the biomass.

8. Method according to any one of the claims 2 to 7, wherein hydrogen or carbon monoxide is removed from the product stream.

9. Method according to any one of the claims 2 to 8 with a partial pressure for hydrogen or carbon monoxide between 0.01 MPa and 10 MPa.

## Revendications

1. Procédé de conversion de biomasse en des produits gazeux comprenant les étapes consistant à :
a) préparer une biomasse présentant une teneur en eau d'au moins 50 % dans un réacteur,
b) chauffer la biomasse à une température comprise entre 500°C et 700°C sous une pression comprise entre 22,1 MPa et 30 MPa de sorte qu'il se forme dans le flux produit outre les produits gazeux hydrogène, monoxyde de carbone, dioxyde de carbone et métal, également des furfurals et des phénols,
c) addition d'un agent de formation d'hydrogène actif pendant et après le chauffage de la biomasse de sorte que les furfurals se décomposent,
d) extraction des produits gazeux du flux produit.

2. Procédé conforme à la revendication 1, selon lequel les moyens de formation d'hydrogène actif renferment de l'hydrogène et un catalyseur d'hydrogénation.

3. Procédé conforme à la revendication 2, selon lequel le réacteur ou sa surface est totalement ou partiellement constitué du catalyseur d'hydrogénation.

4. Procédé conforme à la revendication 2 ou 3, selon lequel le catalyseur d'hydrogénation est constitué par un élément du sixième ou du huitième sous groupe de la classification périodique ou par un alliage qui renferme au moins un tel élément.

5. Procédé conforme à la revendication 4, selon lequel le catalyseur d'hydrogénation est constitué par du nickel, du palladium, du platine, ou par un alliage qui renferme au moins un tel élément.

6. Procédé conforme à la revendication 1,
**caractérisé en ce que**
les moyens de formation d'hydrogène actif renferment du monoxyde de carbone et un sel alcalin.

7. Procédé conforme à la revendication 6, selon lequel le sel alcalin est présent dans la biomasse.

8. Procédé conforme à l'une des revendications 2 à 7, selon lequel de l'hydrogène ou du monoxyde de carbone est extrait du flux produit.

9. Procédé conforme à l'une des revendications 2 à 8, selon lequel la pression partielle d'hydrogène ou de monoxyde de carbone est comprise entre 0,01 MPa et 10 MPa.
